# EUROPEAN PATENT APPLICATION

(11) **EP 3 085 891 A1**
(43) Date of publication of application: **26.10.2016**
(21) Application number: 16163804.4
(22) Date of filing: 05.04.2016
(51) Int. Cl.: F01D 5/14, F01D 5/18

(54) **MANUFACTURE OF A HOLLOW AEROFOIL**

(30) Priority: 23.04.2015 GB 201506901
(71) Applicant: Rolls-Royce plc, London SW1E 6AT (GB)
(72) Inventor: Wallis, Michael, Derby, Derbyshire DE24 8BJ (GB); Wood, Philip, Derby, Derbyshire DE24 8BJ (GB); Whittaker, Kate, Derby, Derbyshire DE24 8BJ (GB); Antrobus, Neil, Derby, Derbyshire DE24 8BJ (GB)
(74) Representative: Rolls-Royce plc

(57) **Abstract**

A method of manufacturing a hollow aerofoil component (100) for a gas turbine engine (10) comprises using a capping panel (200) to cover a pocket in a pocketed aerofoil body (300). An activation material (400) is placed between the capping panel (200) and the pocketed aerofoil body (300), and the temperature of the assembly (500) is raised to a bonding temperature. The capping panel (200) and pocketed aerofoil assembly (300) are thereby joined together using activated diffusion bonding to form the hollow aerofoil component (100).

## Description

The present disclosure relates to a hollow aerofoil.

Aerofoil shaped components are used throughout gas turbine engines. For example, aerofoil shaped stator vanes and rotor blades are used to guide gas through the engine, for example both in the turbine and the compressor, including the fan and associated guide vanes.

Weight reduction is an important consideration in gas turbine engines, particularly, although not exclusively, for gas turbine engines used to power aircraft. Generally, the lower the weight of the component the better the performance of the aircraft to which it is fitted, for example in terms of fuel consumption. To this end, it is known to use hollow aerofoils, e.g. rotor blades and/or stator vanes, in some stages of gas turbine engines.

One method of producing a hollow aerofoil involves forming the structure using a skin. This involves creating an internal cavity (which may be filled with another, lighter weight, material) using hot creep or super plastic forming processes. Such processes may generate aerofoils with some advantageous properties, such as thin skin thickness and tight dimensional tolerance, but they involve significant material wastage. This material wastage makes these processes expensive, due at least to high material cost for a given size of hollow aerofoil component.

An alternative method or producing hollow aerofoil components involves welding a plate to an aerofoil structure out of which a pocket has been machined. The plate is placed into the pocket and welded in position to produce a hollow aerofoil component.

An advantage of producing the hollow aerofoil by using a plate to cover a pocket in an aerofoil structure is that there is less material wastage than using a skin to produce the hollow aerofoil. However, the dimensional tolerances are not so accurate. This may be because distortion and/or internal stress is introduced during the welding process used to attach the plate to the pocketed aerofoil due to the significant local heat input in the region of the weld. Furthermore, the material properties in the region of the weld may be adversely affected by the very high local heat input required during the weld.

A further disadvantage of conventional methods for attaching a cover plate to a pocketed aerofoil is that a separate weld is required to attach each cover plate to its respective pocketed aerofoil. This makes the process of producing multiple aerofoils time consuming and expensive, because it is necessary to repeat the entire welding process for each individual vane.

It would be desirable to provide an improved process for manufacturing hollow aerofoils.

According to an aspect, there is provided a method of manufacturing a hollow aerofoil comprising:
providing a pocketed aerofoil body having an open pocket formed therein, the pocketed aerofoil body comprising an aerofoil joining surface;
positioning a capping panel over the pocketed aerofoil body such that a capping panel joining surface of the capping panel is adjacent the aerofoil joining surface, thereby covering the open pocket to form an intermediate aerofoil assembly having a cavity. The capping panel joining surface may be said to abut the aerofoil joining surface.

The method further comprises providing an activation bonding material between the capping panel joining surface and the aerofoil joining surface to locally reduce the melting point of the capping panel and/or the pocketed aerofoil body. The melting point may be said to be lowered at the capping panel joining surface and/or at the aerofoil joining surface.

The method further comprises an activated diffusion bonding step in which the capping panel joining surface and the aerofoil joining surface are joined together through activated diffusion bonding. During the activated diffusion bonding step, the capping panel joining surface, activation bonding material, and aerofoil joining surface are raised to a bonding temperature at which the capping panel is joined to the pocketed aerofoil body through activated diffusion bonding between the aerofoil joining surface and the capping panel joining surface.

Activated diffusion bonding allows the capping panel to be joined to the pocketed aerofoil body without causing internal stress and/or warping/distortion around the joint. This may be a result of the bonding temperature being lower, for example significantly lower, than the melting point of the materials being joined. The bonding temperature may be lower than the melting point of the capping panel and the pocketed aerofoil body.

The material at the resulting join between the capping panel and the pocketed aerofoil body may be indistinguishable from the parent material. This may be because the activation bonding material may diffuse through the parent material during the activated diffusion bonding (which may include a prolonged period at an elevated temperature (which may be the bonding temperature)). After completion of the activated diffusion bonding, it may no longer be possible to melt or substantially weaken the join between the capping panel and the pocketed aerofoil body by raising its temperature back up to the bonding temperature. Indeed, the melting point (and other properties) of the material at the join may be substantially the same as that of the parent material (that is, the capping panel and/or the pocketed aerofoil body).

The temperature of the capping panel joining surface, activation bonding material, and aerofoil joining surface (which collectively may be referred to as the join interface) may be raised to the bonding temperature in any suitable manner. For example, the activated diffusion bonding step may comprise exposing the entire intermediate aerofoil assembly to an elevated temperature (which may be the bonding temperature, at least for a part of the time that it is at an elevated temperature). The intermediate aerofoil assembly may be held at an elevated temperature for a predetermined time, for example in the range of from 1 to 10 hours, for example 2 to 9 hours, for example 4 to 8 hours, for example on the order of 6 hours. At least a part of this time may be at the bonding temperature. The intermediate aerofoil assembly (or at least the join interface thereof) may be exposed to the elevated temperature for sufficient time to allow the activation bonding material to diffuse through the parent material, so that it is not concentrated at the join.

In some arrangements, the temperature of the entire intermediate aerofoil assembly may not be elevated, and instead just the temperature of the join interface may be raised locally.

The activation bonding material may be provided between at least a part (for example all) of the region over which the capping panel joining surface is adjacent the aerofoil joining surface.

The pocketed aerofoil body may have a recess. The recess may be formed around the open pocket. For example, the recess may surround the open pocket, for example at the perimeter edge of the open pocket.

In such an arrangement, the step of positioning the capping panel over the pocketed aerofoil body may comprise placing the capping panel into the recess. The recess may be said to have a support surface (which may point outwardly from the open pocket), and the capping panel may be placed in the recess such that the support surface forms at least a part of the aerofoil joining surface. At least a part of an inner surface of the capping panel may form at least a part of the capping panel joining surface.

The recess may comprise a lateral surface as well as a support surface. The lateral surface may substantially perpendicular to the support surface and/or substantially perpendicular to the surface of the aerofoil body in which the open pocket is formed (which may be referred to as a surrounding surface). The recess may be said to have an "L" shape in cross section.

Activation bonding material may be provided between one or both of the support surface and the capping panel and/or the lateral surface and the capping panel. As described by way of example elsewhere herein, activation bonding material may be provided elsewhere, for example between a support structure in the pocket and the capping panel.

The bonding temperature may be determined by the temperature to which the melting point of the capping panel and pocketed aerofoil body is lowered by the activation bonding material. For example, the bonding temperature may be in the range of from 400 degrees C and 1000 degrees C, for example 500 degrees C and 900 degrees C, for example 550 degrees C and 800 degrees C, for example 600 degrees C and 750 degrees C, for example 650 degrees C and 680 degrees C lower than the melting point of the capping panel and pocketed aerofoil body. By way of example, the temperature by which the activation bonding temperature locally lowers the melting point of the capping panel and pocketed aerofoil body may be within the above ranges.

The capping panel and/or the pocketed aerofoil body may be manufactured using any suitable material. The capping panel and/or the pocketed aerofoil body may be manufactured using titanium. The capping panel and/or the pocketed aerofoil body may be manufactured using the same material.

Any suitable activation bonding material may be used. The choice of activation bonding material may be dependent on the "parent" material, that is the material of the capping panel and/or the pocketed aerofoil body. Purely by way of example, the activation bonding material may comprise (for example may be) CuNi (copper and nickel). Such CuNi activation bonding material may be suitable for use with titanium parent material. Where a CuNi activation bonding material is used, the melting point of a titanium capping panel and/or pocketed aerofoil body may be reduced from around 1600 degrees C to around 920 to 950 degrees C.

The activation bonding material may be provided in any suitable form. For example, the activation bonding material may be provided as a foil.

The activation bonding material may retain its position between the capping panel and the pocketed aerofoil body without the need to be fixed in place. Alternatively, the activation bonding material may be (temporarily) fixed in position prior to the activated diffusion bonding step. For example, where the activated diffusion bonding material is provided as a foil, it may be spot welded in position prior to the activated diffusion bonding step.

Any one or more (for example all) of the method steps for manufacturing a hollow aerofoil described and/or claimed herein may be automated and/or performed by a robot, Purely by way of example, the activated diffusion bonding material may be positioned using a robot. Any one or more of the method steps may alternatively be performed by an operator, for example by hand.

The method of manufacturing a hollow aerofoil may further comprise temporarily joining the capping panel to the pocketed aerofoil body prior to the step of activated diffusion bonding. For example, the capping panel may be spot welded to the pocketed aerofoil body so as to hold it in position before the activated diffusion bonding step.

During the activated diffusion bonding step, the longitudinal axis of the intermediate aerofoil assembly may be aligned with the vertical direction. In this regard, the longitudinal axis may be defined in the conventional manner, extending from a root to a tip of the intermediate aerofoil assembly.

A support structure (which may be referred to as an internal support structure) may be provided in the open pocket. For example, the support structure may be provided in the cavity of the intermediate aerofoil assembly. Activation diffusion bonding material may be provided between the support structure and the lower surface of the capping panel. Accordingly, the method may comprise activated diffusion bonding of the capping panel to a support structure. Such a support structure may support the assembly, for example the capping panel, during the activated diffusion bonding step. Where a support structure is used, it may be removed after manufacture, for example after the activated diffusion bonding step. Alternatively, the support structure may remain in situ as a part of the finished hollow aerofoil. The support structure may provide rigidity during the activated diffusion bond cycle thereby reducing distortion and/or may enable reduction in vane and/or cap material thickness for service weight reduction.

By way of non-limitative example, such a support structure may be a honeycomb cell structure (for example titanium) or an open lattice work (for example titanium). By way of further non-limitative example, such a support structure may be formed by ribs which may extend from the base of the pocketed aerofoil body and/or be integral with the pocketed aerofoil body (for example such ribs may be machined with the pocket). Purely by way of further example, the support structure may be a filler. Such a support structure may thus be a part of the pocketed aerofoil body or may be a separate body. Purely by way of example, the support structure may be provided and/or removed through holes in the structure. Such holes (where present) may be filled so as to become continuous and/or contiguous with the surrounding surface of the finished hollow aerofoil.

The activated diffusion bonding step may be performed in a furnace, such as a vacuum furnace. Accordingly, the method may comprise putting the intermediate aerofoil assembly into such a furnace. The temperature of the assembly may be raised in the furnace to the temperature required (and for the time required) to perform diffusion bonding such as those temperatures and/or times provided by way of example herein.

Multiple hollow aerofoils may be manufactured according to the methods and/or using the apparatus described and/or claimed herein. Various steps of the method (such as, for example, the activated diffusion bonding step) may be performed simultaneously for all of the aerofoils.

According to an aspect, there is provided a batch process for manufacturing multiple hollow aerofoils comprising the method(s) described and/or claimed herein for manufacturing a hollow aerofoil.

According to an aspect, there is provided a method of manufacturing multiple hollow aerofoils comprising performing the method as described and/or claimed herein to each of the multiple aerofoils. The activated diffusion bonding step may be performed at the same time (and, for example, using the same apparatus) for each of the aerofoils, thereby completing the manufacture of the multiple aerofoils in a single batch.

The manufacture of any suitable number of hollow aerofoils may be completed at the same time during such a process, for example in the range of from 2 to 200, for example 10 to 100, for example 25 to 75, for example on the order of 50.

According to such a method of manufacturing multiple hollow aerofoils, the activated diffusion bonding step may comprise placing each of the multiple intermediate aerofoil assemblies in a single furnace, such as a vacuum furnace.

The method may comprise putting the intermediate aerofoil assembly into a sacrificial box (which may be referred to as a box fixture) prior to the activated diffusion bonding step. Such a sacrificial box may completely surround the intermediate aerofoil assembly inside a furnace. Such a sacrificial box may be manufactured from titanium, for example in arrangements in which the intermediate aerofoil assembly comprises titanium, for example the capping panel and/or the hollow aerofoil body is titanium.

A sacrificial box may be effective in the prevention of Alpha case formation, for example where at least a part of the intermediate aerofoil assembly is titanium. The sacrificial box may preferentially combine with any oxygen in the furnace, rather than the oxygen combining with the intermediate aerofoil assembly. This may be useful even where a vacuum furnace is used, as a small but significant level of oxygen may be present even in such vacuum furnaces.

Swarf or shavings may be provided in the sacrificial box. Such swarf or shavings may be the same material as the box itself and/or as at least a part of the intermediate aerofoil assembly. The swarf or shavings may provide sacrificial surface area available for combining with any oxygen during the activated diffusion bonding step. In some arrangements, the swarf or shavings may be the only sacrificial material, and may be inside a box fixture that is not sacrificial (the intermediate aerofoil assembly also being provided in the box).

For arrangements in which the activated diffusion bonding is performed for multiple aerofoils at the same time, each of the intermediate aerofoil assemblies may be put inside the same box fixture (or sacrificial box), which may be a titanium box. The box may be put into a furnace (such as a vacuum furnace) as a single unit in order to perform the activated diffusion bonding for all of the intermediate aerofoil assemblies. Again, swarf or shavings (such as titanium swarf or shavings) may be provided in the box fixture.

Purely by way of example, the box fixture may be a cuboid shape. The box fixture may have a base (onto which swarf or shavings may optionally be provided), onto which the sides (for example four sides) may be provided. The intermediate aerofoil assemblies may be attached to a further panel (for example so that their longitudinal axes are substantially vertically oriented), which may form the top of the box and may be supported by the sides of the box.

According to any aspect, the hollow aerofoil that is manufactured may be an aerofoil for a gas turbine engine, for example a rotating blade or a stationary blade, for example as part of a compression system or part of a turbine. For example the hollow aerofoil may be a guide vane, which may be positioned downstream (for example immediately downstream) of the fan of a turbofan gas turbine engine. Such a guide vane may be referred to as an outlet guide vane.

According to an aspect, there is provided a hollow aerofoil manufactured using the methods and/or components described and/or claimed herein.

According to an aspect, there is provided a gas turbine engine comprising an aerofoil (or aerofoil component) as described and/or claimed herein and/or manufactured according to any of the methods described and/or claimed herein.

Where the term "hollow aerofoil" or similar is used herein, this may include (by way of example) aerofoils having an empty cavity or aerofoils having a cavity that is filled (including substantially filled), for example with a material that is less dense than the material of the capping panel and the pocketed aerofoil body. Accordingly, a method of manufacturing a hollow aerofoil may comprise filling the cavity with a material that is less dense than the material of the capping panel and pocketed aerofoil body. Such a material may be, for example, a damping material.

Arrangements will now be described by way of example only, with reference to the drawings, in which:
Figure 1 is a sectional side view of a gas turbine engine;
Figure 2A is a schematic showing a hollow aerofoil in accordance with the disclosure;
Figure 2B is a section through the line labelled 2B in Figure 2A;
Figure 2C is a section through the line labelled 2C in Figure 2A;
Figure 3 is a schematic cross-section through a capping panel and a pocketed aerofoil body before they are joined together;
Figure 4 is a schematic cross-section through a capping panel and a pocketed aerofoil body before they are joined together;
Figure 5 is a schematic cross-section through a part of a hollow aerofoil in accordance with the present disclosure in a region where a capping panel and a pocketed aerofoil body have been joined;
Figure 6 is a schematic showing a box fixture containing multiple intermediate aerofoil assemblies; and
Figure 7 is a flowchart showing an example of a method for manufacturing a hollow aerofoil in accordance with the present disclosure.

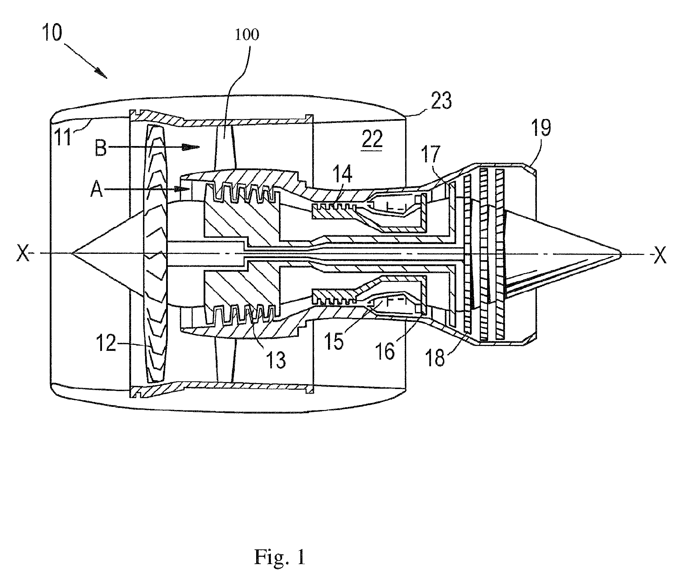

With reference to Figure 1, a ducted fan gas turbine engine generally indicated at 10 has a principal and rotational axis X-X. The direction X-X may be referred to as the axial direction of the engine. The engine 10 comprises, in axial flow series, an air intake 11, a propulsive fan 12, an intermediate pressure compressor 13, a high-pressure compressor 14, combustion equipment 15, a high-pressure turbine 16, an intermediate pressure turbine 17, a low-pressure turbine 18 and a core engine exhaust nozzle 19. A nacelle generally surrounds the engine 10 and defines the intake 11, a bypass duct 22 and a bypass exhaust nozzle 23.

The gas turbine engine 10 works in a conventional manner so that air entering the intake 11 is accelerated by the fan 12 to produce two air flows: a first air flow A into the intermediate pressure compressor 13 and a second air flow B (which may be referred to as a bypass flow B) which passes through the bypass duct 22 to provide propulsive thrust. The intermediate pressure compressor 13 compresses the air flow A directed into it before delivering that air to the high pressure compressor 14 where further compression takes place.

The compressed air exhausted from the high-pressure compressor 14 is directed into the combustion equipment 15 where it is mixed with fuel and the mixture combusted. The resultant hot combustion products then expand through, and thereby drive the high, intermediate and low-pressure turbines 16, 17, 18 before being exhausted through the nozzle 19 to provide additional propulsive thrust. The high, intermediate and low-pressure turbines 16, 17, 18 respectively drive the high and intermediate pressure compressors 14, 13 and the fan 12 by suitable interconnecting shafts. Other gas turbine engines to which the present disclosure may be applied may have different configurations, for example having two shafts, three shafts and/or a gearbox through which the fan 12 is linked to a turbine.

As the air passes through the gas turbine engine 10 it is heated to high temperatures. In particular, the first airflow A reaches high temperatures as it passes through the core of the engine. Typically, particularly high temperatures may be reached at the exit of the combustion equipment 15, and as the air subsequently passes through the high, intermediate and low-pressure turbines 16, 17, 18.

The gas turbine engine 10 comprises outlet guide vanes (OGVs) 100 extending across the bypass duct 22, which therefore sit in the bypass flow B. Each OGV 100 takes the form of a large stator vane, and thus may be referred to as an aerofoil or aerofoil component 100. A plurality of OGVs 100 is typically provided as an annular array in the bypass duct 22.

Because each OGV 100 is an especially large aerofoil component, it is particularly advantageous to reduce its weight. Thus, the OGV 100 in the gas turbine engine 10 is hollow.

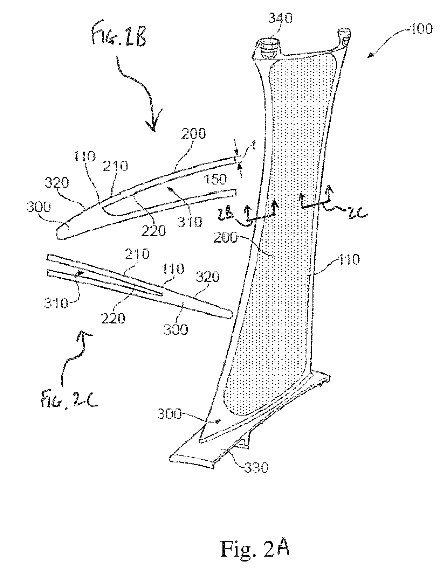

Figures 2A-2C (collectively referred to as Figure 2) show a schematic of a hollow OGV 100 according to an example of the present disclosure. As illustrated in Figure 2, the hollow OGV 100 is manufactured by joining a capping panel 200 to a pocketed aerofoil body 300. In the Figure 2 example, the location of the join between the capping panel 200 and the pocketed aerofoil body 300 is shown by line 110 for schematic purposes only. In reality, the line 110 (and indeed the shading on the capping panel 200) may not be visible on the aerofoil 100.

Figure 2 shows the capping panel 200 and the pocketed aerofoil body 300 joined together to form a hollow OGV 100 having a cavity 150 (which may or may not be filled). However, it will be appreciated that prior to joining, the capping panel 200 and the pocketed aerofoil body 300 are separate entities. The capping panel 200 and the pocketed aerofoil body 300 may be any suitable material, for example metallic (such as titanium), and may be the same or different materials.

The pocketed aerofoil body 300 comprises a pocket 310, which may be described as an open pocket 310, formed in a surrounding hollowed surface 320. For example, the pocket 310 may be machined into an original surface of an aerofoil blank, leaving a portion of the original surface of the aerofoil blank, referred to as the surrounding hollowed surface 320, surrounding the pocket 310. The original aerofoil blank may be, for example, a close-to-size forging. The surrounding hollowed surface 320 may be a part of the gas washed surface of the finished OGV 100, for example a part of the pressure surface or the suction surface, as in the examples shown in the Figures. The surrounding hollowed surface 320 may require finishing to become a part of the gas washed surface of the finished OGV 100.

In the example shown in Figure 2, the pocketed aerofoil body 300 comprises an inner attachment 330 (which may be a platform) and an outer attachment 340, which may be used to attach the finished OGV 100 to the rest of the gas turbine engine. However, it will be appreciated that some pocketed aerofoil bodies 300 may not include one or both of the inner attachment 330 and outer attachment 340. For example, the inner and/or outer attachments 330/340 may be separate features that may be attached to the hollow aerofoil 100 after the capping panel 200 and the pocketed aerofoil body 300 have been joined together.

The capping panel 200 comprises an inner surface 220 that faces into the pocket 310, and an outer surface 210 that faces in the opposite direction to the inner surface 220, i.e. the outer surface 210 faces away from the pocket 310. The capping panel 200 may be said to be a thin body, having an inner surface 220 separated from an outer surface 210 by a thickness t. The outer surface 210 may form a part of the gas washed surface of the finished OGV 100, for example after a finishing step. For example, the outer surface 210 may form a part of the pressure surface, or the suction surface as in the example shown in the Figures. After joining the pocketed aerofoil body 300 and the capping panel 200 (and optionally applying a finished step to the resulting hollow aerofoil component), the outer surface 210 may be a continuation of the surrounding hollowed surface 320 of the pocketed aerofoil body 300.

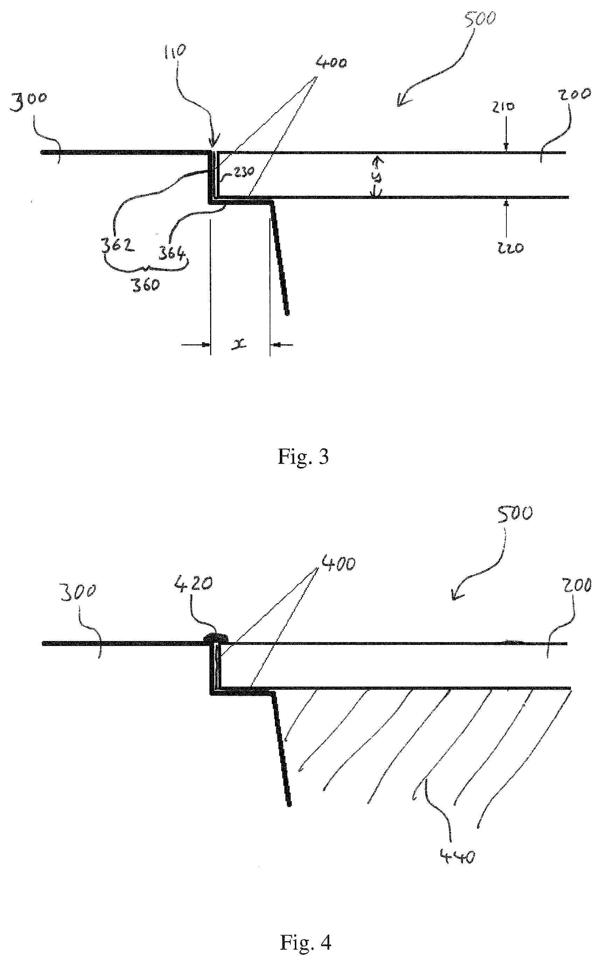

Figure 3 shows a close up view of the region around the join between the capping panel 200 and the pocketed aerofoil body 300 prior to joining. The arrangement shown in Figure 3 (and indeed Figure 4) may be referred to as an intermediate aerofoil assembly 500. The pocketed aerofoil body 300 is provided with a recess 360. The recess 360 comprises a support surface 364 and a lateral surface 362. The support surface 364 supports the capping panel 200. For example, the lower surface 220 of the capping panel 200 may rest on the support surface 364. The recess 360 may extend around the perimeter of the pocket 310 of the pocketed aerofoil body 300.

The support surface 364 and the lateral surface 362 may be of any desired/suitable size. Purely by way of example, the width of the support surface 364 (dimension x in the Figures) may be in the range of from 1 mm to 20mm, for example 2mm to 10 mm, for example 3mm to 4mm, for example on the order of 4mm. Also purely by way of example the depth of the lateral surface 364 (which may be substantially the same as the thickness of the panel 200, represented by dimension y in the Figures) may be in the range of from 0.2mm to 5mm, for example 0.5mm to 2 mm, for example on the order of 1 mm.

An activation bonding material 400 is provided between the capping panel 200 and the pocketed aerofoil body 300. The activation bonding material 400 may be provided, for example, between the support surface 364 of the recess 360 and the part of the lower surface 220 of the capping panel 200 that rests on the support surface 364 and/or between the lateral surface 362 of the recess 360 and a side surface 230 of the capping panel 200. In the example shown in Figure 3, the activation bonding material 400 is provided between the capping panel 200 and both the lateral surface 362 and the support surface 364 of the recess 360.

The activation bonding material 400 may be provided in any suitable form, such as a foil. By way of example, the activation bonding material shown in Figure 3 may be a CuNi foil. Also by way of example, the capping panel 200 and the pocketed aerofoil body 300 shown in Figure 3 may be titanium.

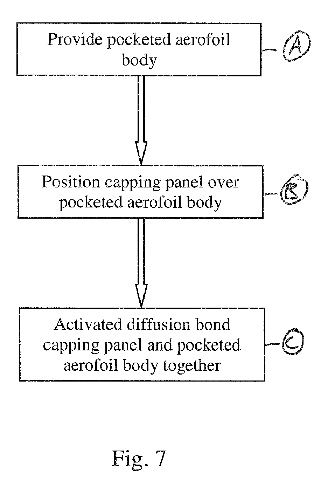

An example of the manufacturing process to produce the hollow aerofoil 100 is shown in Figure 7. The first step A in the process shown in Figure 7 is to provide the pocketed aerofoil body 300. This may be performed, for example, by machining a pocket 310 (and optionally a recess 360) from an aerofoil blank as described elsewhere herein.

The second step B is to position the capping panel 200 over the pocketed aerofoil body 300. This may be performed, for example, by placing the capping panel 200 into the recess 360, such that it is supported by the supporting surface 364 of the recess 360, as shown in the examples of Figures 3 and 4.

The third step C is to activated diffusion bond the capping panel 200 and the pocketed aerofoil body 300 together. In order to perform this step, the activation bonding material 400 is provided between the capping panel 200 and the pocketed aerofoil body 300 in the region(s) where the activated diffusion bonding is required. Thus, for example, the process may comprise an additional step of providing activation bonding material between the capping panel 200 and the pocketed aerofoil body 300. Such an additional step may be, for example, between steps A and B in the process shown in Figure 7, or may be considered to be an integral part of any one of steps A, B or C.

The activated diffusion bonding step also comprises raising the temperature of the intermediate aerofoil assembly 500 to a bonding temperature. At the bonding temperature, the capping panel 200 and the pocketed aerofoil body 300 join together in the region of the activation material 400. The activation material 400 acts to lower the melting point of the material to which it is adjacent, and thus of the adjacent material of the capping panel 200 and the pocketed aerofoil body 300. As described elsewhere herein, the bonding temperature may be chosen to be a temperature at which the material of the capping panel 200 and pocketed aerofoil body 300 adjacent the activation material 400, but remains substantially unaffected in regions away from the activation material 400. For a titanium capping panel 200 and pocketed aerofoil body 300, with a CuNi activation material 400, the bonding temperature may be in the range of from 920 to 950 deg C, for example.

The intermediate aerofoil assembly 500 may be held at an elevated temperature (for example at the bonding temperature) for an extended period of time. This may be considered to be part of the activated diffusion bonding step. The extended period of time (examples of which are provided elsewhere herein) may be sufficient to allow the activation material 400 to diffuse through the parts being joined.

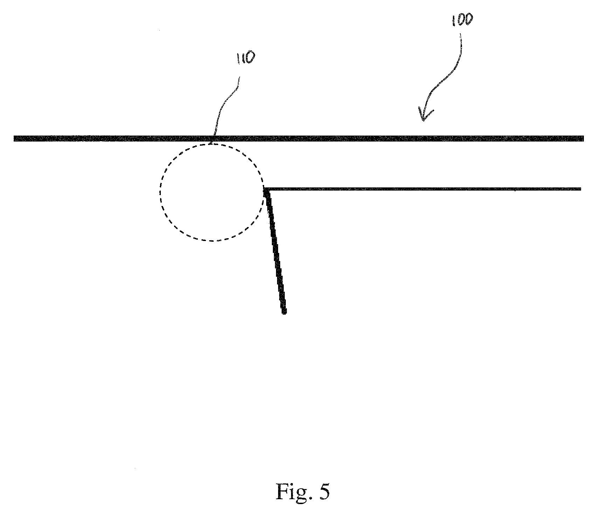

After the parts 200, 300 have been joined through activated diffusion bonding, the material of the resulting hollow aerofoil 100 in the region of the join 110 may be indistinguishable (including substantially indistinguishable) from the surrounding material. This is illustrated schematically in Figure 5, which shows the join region 110 of the hollow aerofoil 100 after the activated diffusion bonding step. As shown in Figure 5, the material inside the dashed region (which indicated the region of the join 110) is substantially the same as the material outside the dashed region. This means that the material in the region of the join 110 has the same properties (for example in terms of strength and/or melting point) as the original material of the capping panel 200 and the pocketed aerofoil body 300 (at least where the capping panel 200 and the pocketed aerofoil body 300 are the same material. Thus, for example, raising the temperature of the join region back up to the bonding temperature would not result in the join region melting or softening. Where different materials are used for the capping panel 200 and the pocketed aerofoil body 300, the material properties at the join 200 may gradually change from those of the capping panel 200 to those of the pocketed aerofoil body 300.

Any suitable method may be used to raise the temperature of the join region 110 during the activated diffusion bonding step. For example, the entire intermediate aerofoil assembly 500 may be placed inside a furnace, such as a vacuum furnace.

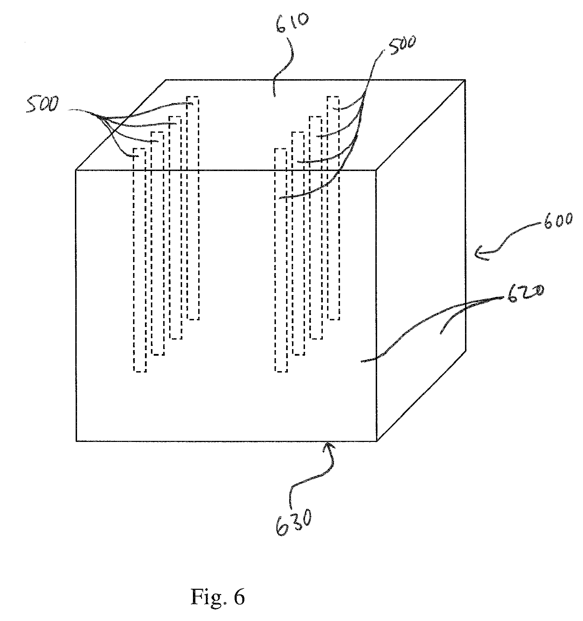

The intermediate aerofoil assembly 500 may be placed inside a box fixture before having its temperature raised for activated diffusion bonding, for example before being put into a furnace. Such a box fixture may provide sacrificial material with which any oxygen in the furnace may combine in preference to combining with the material of the intermediate aerofoil assembly 500. Where the intermediate aerofoil assembly 500 comprises titanium, the box fixture may be titanium, and may simply be referred to as a titanium box. This may substantially eliminate Alpha case formation on the intermediate aerofoil assembly 500 (and resulting hollow aerofoil 100). An example of a box fixture 600 in shown and described below in relation to Figure 6.

The activated diffusion bonding step may be performed at the same time for multiple intermediate aerofoil assemblies 500. Figure 6 shows, in schematic form, multiple intermediate aerofoil assemblies 500 arranged in a box fixture 600. The intermediate aerofoil assemblies 500 are suspended from a top (or roof) surface 610 of the box fixture 600. The intermediate aerofoil assemblies 500 shown in Figure 6 are suspended with their longitudinal axes (i.e the axis extending substantially from the root to the tip, along the span of the aerofoil) aligned with the vertical (i.e. aligned with gravity). The top surface 610 of the box fixture 600 sits on side surface 620, which in turn sits on a base surface 630. Of course, constructions and arrangements of box fixture 600 other than that shown in Figure 6 are possible. The properties of the box fixture 600 (for example in terms of material and/or shape) may be as described and/or claimed herein by way of example.

Various alternatives and options to the processes and apparatus described herein are possible. Purely by way of example, Figure 4 shows an intermediate aerofoil assembly 500 that is substantially the same as that shown in Figure 3 (with like reference numerals indicating like features) other than in that it has a spot resistance weld 420 between the capping panel 200 and the pocketed aerofoil body 300 and a support structure 440.

The spot resistance weld 420 may fix the position of the capping panel 200 relative to the pocketed aerofoil body 300 prior to the activated diffusion bonding. The spot resistance weld may be consumed during the activated diffusion bonding process. The spot resistance weld may, for example, extend all of the way through the capping panel so as to spot weld the capping panel to the pocketed aerofoil body, for example to the recess 360, for example to the supporting surface 364 of the recess 360.

The support structure 440 may support the capping panel 200, for example before and during the activated diffusion bonding step. The support structure 440 may be, for example, a filler. The support structure 440 may be removed after activated diffusion bonding, or may be removed from the hollow aerofoil 100 after activated diffusion bonding.

Of course, the spot resistance weld 420 and the support structure 440 may be provided in combination or alone, as with other optional features.

Although the invention has largely been described herein in relation to an OGV 100, it will be appreciated that it could be applied to any suitable component, such as any aerofoil or aerofoil component, such as any rotor blade or stator vane, for example for use in a turbine, compressor, or other aerofoil-shaped component of a gas turbine engine.

It will be appreciated that many designs and/or arrangements of features, such as capping panel, pocketed aerofoil body or joining process, other than those shown in and described in relation to Figures 1 to 7 and not explicitly described herein fall within the scope of the invention. Furthermore, any feature described and/or claimed herein may combined with any other compatible feature described in relation to the same or another embodiment.

## Claims

1. A method of manufacturing a hollow aerofoil (100) comprising:
providing a pocketed aerofoil body (300) having an open pocket (310) formed therein, the pocketed aerofoil body comprising an aerofoil joining surface (362, 364);
positioning a capping panel (200) over the pocketed aerofoil body, such that a capping panel joining surface (220) of the capping panel is adjacent the aerofoil joining surface, thereby covering the open pocket to form an intermediate aerofoil assembly (500) having a cavity (150), wherein
an activation bonding material (400) is provided between the capping panel joining surface and the aerofoil joining surface to locally reduce the melting point of the capping panel at the capping panel joining surface and the pocketed aerofoil body at the aerofoil joining surface; and
the method further comprises an activated diffusion bonding step in which the capping panel joining surface, activation bonding material, and
aerofoil joining surface are raised to a bonding temperature at which the capping panel is joined to the pocketed aerofoil body through activated diffusion bonding between the aerofoil joining surface and the capping panel joining surface.

2. A method of manufacturing a hollow aerofoil body according to claim 1, wherein the activated diffusion bonding step comprises exposing the entire intermediate aerofoil assembly to an elevated temperature for a predetermined time.

3. A method of manufacturing a hollow aerofoil according to claim 1 or claim 2, wherein
the pocketed aerofoil body has a recess (360) formed around the open pocket; and
the step of positioning the capping panel over the pocketed aerofoil body comprises placing the capping panel into the recess, such that a support surface (364) of the recess forms at least a part of the aerofoil joining surface, and at least a part of an inner surface (220) of the capping panel forms the capping panel joining surface.

4. A method of manufacturing a hollow aerofoil according to any one of the preceding claims, wherein the bonding temperature is in the range of from 600 degrees C and 750 degrees C lower than the melting point of the capping panel and pocketed aerofoil body.

5. A method of manufacturing a hollow aerofoil according to any one of the preceding claims, wherein the activation bonding material locally reduces the melting point of the capping panel and/or the pocketed aerofoil body by in the range of from 600 degrees C and 750 degrees C.

6. A method of manufacturing a hollow aerofoil according to any one of the preceding claims, wherein:
the capping panel and/or the pocketed aerofoil body comprise titanium; and/or
the activation bonding material comprises CuNi.

7. A method of manufacturing a hollow aerofoil according to any one of the preceding claims, wherein the activation bonding material is provided as a foil and, optionally, the method comprises spot welding the foil in place before the activated diffusion bonding step.

8. A method of manufacturing a hollow aerofoil according to any one of the preceding claims, wherein the activation bonding material is positioned using a robot.

9. A method of manufacturing a hollow aerofoil according to any one of the preceding claims, further comprising spot welding (420) the capping panel to the pocketed aerofoil body so as to hold it in position before the activated diffusion bonding step.

10. A method of manufacturing a hollow aerofoil according to any one of the preceding claims, wherein the intermediate aerofoil assembly has a longitudinal axis extending from a root to a tip, and the longitudinal axis is aligned with the vertical direction during the activated diffusion bonding step.

11. A method of manufacturing a hollow aerofoil according to any one of the preceding claims, further comprising providing a support structure (440) in the open pocket to support the capping panel during activated diffusion bonding.

12. A method of manufacturing a hollow aerofoil according to any one of the preceding claims, further comprising putting the intermediate aerofoil assembly into a furnace in order to perform the activated diffusion bonding step.

13. A method of manufacturing multiple hollow aerofoils comprising performing the method of any one of the preceding claims to the multiple aerofoils, with the activated diffusion bonding step being performed at the same time and using the same apparatus for each of the aerofoils, thereby completing the manufacture of the multiple aerofoils in a single batch.

14. A method of manufacturing multiple hollow aerofoils according to claim 13, wherein the activated diffusion bonding step comprises placing each of the multiple intermediate aerofoil assemblies in a single furnace.

15. A method of manufacturing multiple hollow aerofoils according to claim 14, comprising putting each of the intermediate aerofoil assemblies into the same titanium box (600) and placing the titanium box into the furnace.
